# EUROPEAN PATENT SPECIFICATION

(11) **EP 3 492 314 B1**
(45) Date of publication and mention of the grant of the patent: **23.03.2022**
(21) Application number: 16910600.2
(22) Date of filing: 04.11.2016
(51) Int. Cl.: B60N 2/00, B60N 2/70, A47C 7/62, H01H 13/16

(54) **LOAD DETECTION SENSOR UNIT**
LADUNGSERFASSUNGSSENSOREINHEIT
UNITÉ DE CAPTEUR DE DÉTECTION DE CHARGE

(30) Priority: 26.07.2016 JP 2016146663
(43) Date of publication of application: 05.06.2019
(73) Proprietor: Fujikura Ltd., Tokyo 135-8512 (JP)
(72) Inventor: NAKAZAKI Shigeru, Tokyo 135-8512 (JP)
(74) Representative: Grünecker Patent- und Rechtsanwälte PartG mbB
(86) International application number: PCT/JP2016/082853
(87) International publication number: WO 2018/020697

(56) References cited:
- WO-A1-2005/108160
- WO-A1-2013/167505
- CN-U- 204 821 443
- CN-U- 204 845 843
- DE-A1- 2 230 240
- JP-A- 2010 042 809
- JP-A- 2011 105 278
- JP-A- 2014 162 432
- JP-A- 2015 009 751
- JP-A- 2015 009 751

## Description

### Technical Field

The present invention relates to a load detection sensor unit appropriate for a case of detecting load due to seating or the like.

### Background Art

As one of safety systems in a vehicle, an alarm system in which a failure to use a seat belt during a ride is warned has been put to practical use. In this alarm system, a warning is generated in a case in which use of a seat belt is detected in a state in which person's seating is detected. As a device of detecting the person's seating, a load detection sensor detecting load due to seating is used in some cases.

Disclosed as a load detection sensor is one arranged under a seat cushion arranged on a plurality of springs stretched to be arrayed over an opening of a frame (refer to Patent Literature 1 shown below). The load detection sensor in Patent Literature 1 shown below is mounted on a pedestal, and the pedestal is arranged between the two springs opposed to each other. The pedestal is provided with a pair of hooks. One of the hooks is attached to one of the two springs opposed to each other while the other of the hooks is attached to the other of the two springs. Load detection sensor units according to the preamble of independent claim 1 are disclosed in Patent Literature 2 and 3.

Patent Literature 4 proposes to provide a vehicle seat which detects the presence or absence of an occupant with a simple structure. The vehicle seat includes: a seat frame; and multiple spring members installed on the seat frame. The vehicle seat further includes: a resin connection member which connects the multiple spring members with each other; and a flexible occupant detection sensor which is attached to the connection member. When an occupant is seated, the occupant detection sensor is sandwiched between the connection member and a cushion member, thereby detecting the presence or absence of the occupant.

Patent Literature 5 proposes to easily attach a resin member to a pad support wire while preventing the resin member from being easily removed. A resin protector (a resin member) is attached to a pad support wire supporting a seat pad of a vehicle seat from the rear surface side. The protector includes: a cylindrical insertion part where an end part of the pad support wire is inserted in an extension direction, the insertion part which holds the end part so as to enclose the end part from the outer peripheral side and is closed in an endless form; and an engagement part which receives a middle portion of the pad support wire in a radial direction at a position different from the insertion part and holds the pad support wire in a sandwiched manner.

[Patent Literature 1] JP 2011-105278 A
[Patent Literature 2] CN 204 821 443 U
[Patent Literature 3] CN 204 845 843 U
[Patent Literature 4] JP 2015-009751 A
[Patent Literature 5] JP 2014-162432 A

### Summary of Invention

In a case in which the pedestal in Patent Literature 1 shown above is made of a relatively hard member such as a metal, an abnormal sound is easy to be generated due to contact between the pedestal and the springs. On the other hand, in a case in which the pedestal in Patent Literature 1 shown above is made of a relatively soft member such as a resin, the pedestal is creep-deformed in response to repetitive pressure, and the creep deformation easily causes relative displacement between the springs and the hooks. For this reason, due to the relative displacement between the springs and the hooks, the load weight causing the load detection sensor to be turned on may change, and there is concern that the load may not be able to be detected appropriately. In particular, since the creep deformation highly possibly occurs under a high-temperature environment, there is additional concern that the load may not be able to be detected appropriately due to the relative displacement between the springs and the hooks.

An object of the present invention is to provide a load detection sensor unit enabling load to be detected appropriately while restricting generation of an abnormal sound.

To solve the above problem, a load detection sensor unit according to the present invention is a load detection sensor unit according to independent claim 1. Preferred embodiments are set out in the dependent claims. In an embodiment, a load detection unit is arranged under a seat cushion and includes a load detection sensor detecting load, a pedestal including a mounting portion on which the load detection sensor is mounted and attached to at least opposed spring parts out of a plurality of springs stretched to be arrayed over an opening of a frame, and a buffering member arranged at least at a part between the spring part and the pedestal. The pedestal includes a pair of hooks hooked respectively over the opposed spring parts. Each of the hooks extends to cover at least an upper portion of the spring part and an outer portion of the spring part located on an opposite side of the opposed side. The buffering member has lower hardness than that of the pedestal and is arranged between the hook and the spring part.

In such a load detection sensor unit, since the buffering member having lower hardness than that of the pedestal is arranged between the hook of the pedestal and the spring part, a collision of the pedestal with the spring is alleviated, and an abnormal sound caused by the contact between the pedestal and the spring is difficult to occur.

Also, since the pedestal has higher hardness than that of the buffering member, creep deformation is difficult to occur. Thus, relative displacement between the spring part, whose upper portion and outer portion are covered with the hook of the pedestal, and the hook, caused by the creep deformation, is difficult to occur. Accordingly, a change of the load weight causing the load detection sensor to be turned on due to the relative displacement between the spring part and the hook is restricted, and the load can be detected appropriately by the load detection sensor.

In this manner, the load detection sensor unit that can detect the load appropriately while restricting generation of the abnormal sound is provided.

Also, the hook presses the buffering member from the outer portion to an inner portion of the spring part.

In this case, due to pressing by means of the hook, the hook can settle on the spring part via the buffering member. Accordingly, the relative displacement between the spring part and the hook in the direction in which the spring is stretched and in the perpendicular direction is restricted. Consequently, the change of the load weight causing the load detection sensor to be turned on can further be restricted.

Also, a part of the buffering member that the hook presses is located further downward than a lowermost position of the spring part.

In this case, since the hook can settle to wrap the spring part via the buffering member, the relative displacement between the spring part and the hook can further be restricted.

Preferably, in a combination of the load detection sensor unit and the spring part, the buffering member is fitted to the spring part.

In this case, the buffering member itself arranged between the spring part and the hook can restrict the relative displacement between the spring part and the hook, and the pedestal can be settled over the spring more firmly by both the buffering member and the hook.

Also, in the combination of the load detection sensor unit and the spring part, the buffering member preferably extends either/both to a closest first bent portion toward a first end side of the spring from the spring part on which the hook is hooked or/and to a closest second bent portion toward a second end side of the spring from the spring part.

In this case, the spring is covered with the buffering member from the spring part on which the hook is hooked to either/both the first bent portion or/and the second bent portion. Accordingly, relative displacement between the spring and the buffering member can further be restricted, and the pedestal can be settled over the spring more firmly by both the buffering member and the hook.

Also, each of the hooks preferably extends to cover the inner portion of the spring part located on the opposed side.

In this case, since both the sides of the spring are covered with the hook, the relative displacement between the spring part and the hook in a direction perpendicular to a direction in which the spring is stretched is restricted. Accordingly, the change of the load weight causing the load detection sensor to be turned on can further be restricted.

Also, in the combination of the load detection sensor unit and the spring part, a mounting surface of the mounting portion is preferably located further upward than the lowermost position of the spring part.

In this case, since the mounting surface does not project further downward than the spring, the pedestal is not interfered with by anything provided below the spring. Also, since the mounting surface of the pedestal is close to the seat cushion mounted on the spring, load can be detected appropriately.

Also, in the combination of the load detection sensor unit and the spring part, the mounting surface of the mounting portion is preferably located further upward than an uppermost position of the spring part and is preferably connected to the hook at a further upward position than the uppermost position of the spring part.

Since the mounting surface is located further upward than the uppermost position of the spring part and is connected to the hook at the further upward position than the uppermost position of the spring, a level difference between the region over the spring part and the region provided with the load detection sensor in the pedestal can be reduced. Accordingly, restriction on arrangement of the load detection sensor due to the level difference of the pedestal is alleviated, and even in a case in which the distance between the opposed spring parts is short, or in which the load detection sensor is relatively large, the load detection sensor can be arranged in a stable manner.

Also, in the combination of the load detection sensor unit and the spring part, the mounting surface is preferably located at an equal height to or further upward than an uppermost position of a part of the hook covering an upper portion of the spring part.

Since the mounting surface is located further upward than the uppermost position of the hook covering the spring, it is possible to restrict the region provided with the load detection sensor from being interfered with by the region over the spring part. Accordingly, restriction on arrangement of the load detection sensor can further be alleviated.

Also, the buffering member preferably includes a locking nail chat can be hooked on the pedestal via an opening provided in the pedestal, and the locking nail is preferably arranged further outward than the inner portion of each of the opposed spring parts.

In this case, since the locking nail does not exist further inward than the inner portions of the spring parts, restriction on arrangement of the load detection sensor due to the locking nail is alleviated. Accordingly, even in a case in which the distance between the opposed spring parts is short, or in which the load detection sensor is relatively large, the load detection sensor can be arranged in a stable manner.

As described above, according to the present invention, it is possible to provide a load detection sensor unit enabling load to be detected appropriately while restricting generation of an abnormal sound.

### Brief Description of Drawings

Fig. 1 is an exploded view illustrating a configuration of a load detection sensor unit according to a first embodiment.
Fig. 2 is a cross-sectional view illustrating a state in which the load detection sensor unit is attached to S springs.
Fig. 3 is an exploded view of a load detection sensor.
Fig. 4 illustrates an on state of the load detection sensor.
Fig. 5 illustrates the load detection sensor unit according to a second embodiment viewed in the same direction as that in Fig. 2.
Fig. 6 illustrates a case in which a mounting surface of a pedestal of the load detection sensor unit according to the second embodiment is located further upward than a hook viewed in the same direction as that in Fig. 2.
Fig. 7 illustrates the load detection sensor unit according to a third embodiment viewed in the same direction as that in Fig. 2.
Fig. 8 schematically illustrates a state of the pedestal arranged between spring parts in the two opposed S springs in a case in which the upper portion of the S springs is in a planar view.
Fig. 9 schematically illustrates a state of the pedestal arranged between spring parts in one S spring in a case in which the upper portion of the S springs is in a planar view.
Fig. 10 illustrates a state in which a buffering member of the pedestal illustrated in Fig. 8 extends to a part except the S spring on which the hook is hooked.
Fig. 11 illustrates a state in which a buffering member of the pedestal illustrated in Fig. 9 extends to a part except the S spring on which the hook is hooked.

### Description of Embodiments

Hereinbelow, preferred embodiments of a load detection sensor unit according to the present invention will be described in detail with reference to the drawings. It is to be noted that the scale of the respective figures may differ from the scale in the below description to facilitate understanding.

### (1) First Embodiment

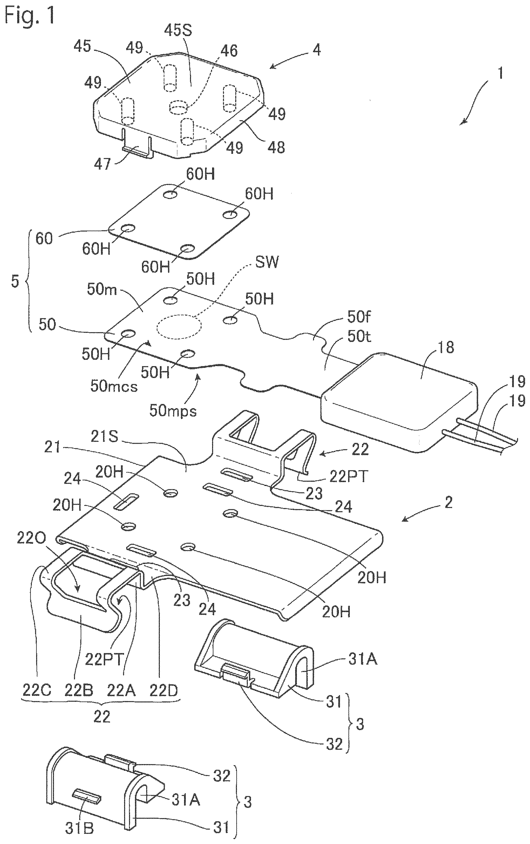

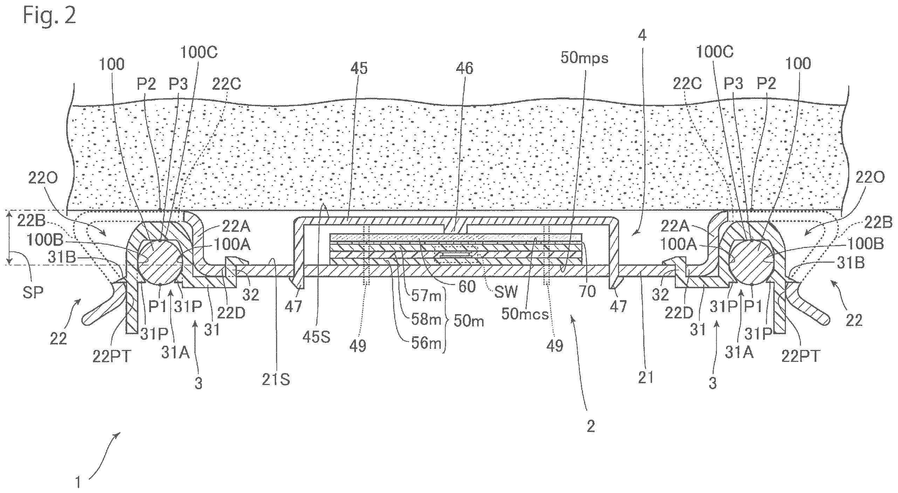

Fig. 1 is an exploded view illustrating a configuration of a load detection sensor unit according to a first embodiment, and Fig. 2 is a cross-sectional view illustrating a state in which the load detection sensor unit is attached to S springs of a seat apparatus. It is to be noted that Fig. 2 is a cross-sectional view of the load detection sensor unit along a surface of the seat apparatus in a right-left direction. As illustrated in Figs. 1 and 2, a load detection sensor unit 1 mainly includes a pedestal 2, a buffering member 3, an upper case 4, and a load detection sensor 5.

The pedestal 2 includes a mounting portion 21 on which the load detection sensor 5 is mounted and a pair of hooks 22 connected to the mounting portion 21. In a case of the present embodiment, the mounting portion 21 and the pair of hooks 22 are integrated by forming a metal plate, and the plate thickness of the integrated pedestal 2 is 0.8 mm, for example.

The mounting portion 21 has as large a size as capable of being arranged between two opposed S springs 100 out of a plurality of S springs 100 (Fig. 2) stretched to be arrayed over an opening of a seat frame in a seating apparatus of a vehicle. The S spring 100 is a spring meandering in an S shape.

In the mounting portion 21, a surface thereof opposed to a seat cushion SC (Fig. 2) is a mounting surface 21S, and on the mounting surface 21S is arranged a main block 50m of the load detection sensor 5 provided with a switch SW. The mounting portion 21 is also provided with a plurality of through holes 20H (Fig. 1) penetrating the mounting portion 21 from the mounting surface 21S to a surface located on the opposite side of the mounting surface 21S. The mounting portion 21 is further provided as openings penetrating the mounting portion 21 from the mounting surface 21S to the surface located on the opposite side of the mounting surface 21S with a plurality of locking nail insertion openings 23 (Fig. 1) and case stop openings 24 (Fig. 1).

The paired hooks 22 are provided respectively at side surface parts of the mounting portion 21 opposed to each other with the mounting portion 21 interposed therebetween. The paired hooks 22 are hooked respectively over spring parts serving as parts of the two opposed S springs 100.

Also, the paired hooks 22 have equal configurations to each other, and each of the hooks 22 includes an inner wall portion 22A, an outer wall portion 22B, an upper wall portion 22C, and an arm portion 22D. A space surrounded by the inner wall portion 22A, the outer wall portion 22B, and the upper wall portion 22C is provided with the spring part serving as a part of the S spring 100. Between the spring part, and the inner wall portion 22A, the outer wall portion 22B, and the upper wall portion 22C, a buffering member 3 is arranged. In the hook 22, the inner wall portion 22A, the outer wall portion 22B, and the upper wall portion 22C can be hooked over and lock the spring part via the buffering member 3.

The inner wall portion 22A extends in a direction away from the mounting portion 21 along a direction perpendicular to the mounting surface 21S on a side of the mounting portion 21 on which the mounting surface 21S is located. In a case in which the spring part is arranged in the space surrounded by the inner wall portion 22A, the outer wall portion 22B, and the upper wall portion 22C, the inner wall portion 22A extends to cover an inner portion 100A of the spring part located on the opposed side. In this case, the inner wall portion 22A contacts a part of an inner side of the buffering member 3 arranged between the inner wall portion 22A and the spring part.

The outer wall portion 22B extends obliquely with respect to the direction perpendicular to the mounting surface 21S on the side of the mounting portion 21 on which the mounting surface 21S is located and to be closer to the mounting portion 21 as the outer wall portion 22B extends further to the tip end. In a case in which the spring part is arranged in the space surrounded by the inner wall portion 22A, the outer wall portion 22B, and the upper wall portion 22C, the outer wall portion 22B extends to cover an outer portion 100B of the spring part located on the opposite side of the opposed side. In this case, the outer wall portion 22B contacts a part of an outer side of the buffering member 3 arranged between the outer wall portion 22B and the spring part and presses the buffering member 3 in a direction from the outer portion 100E to the inner portion 100A of the spring part. A pressing part 22PT of the outer wall portion 22B of the hook 22 pressing the buffering member 3 is bent to project toward the pedestal 2. The pressing part 22PT is located further downward than a lowermost position P1 of the spring part arranged in the space surrounded by the inner wall portion 22A, the outer wall portion 22B, and the upper wall portion 22C.

The upper wall portion 22C is located further upward than the mounting surface 21S of the mounting portion 21 and extends to be approximately parallel to the mounting surface 21S. In a case in which the spring part is arranged in the space surrounded by the inner wall portion 22A, the outer wall portion 22B, and the upper wall portion 22C, the upper wall portion 22C extends to cover an upper portion 100C of the spring part and contacts a part of an upper side of the buffering member 3 arranged between the upper wall portion 22C and the spring part.

In this manner, the inner wall portion 22A, the outer wall portion 22B, and the upper wall portion 22C of the hook 22 extend to cover the spring part of the S spring 100 and can hold the spring part to wrap the spring part via the buffering member 3 in three directions of the upper side and both the lateral sides.

The arm portion 22D is a strip-like part connecting the side portion of the mounting portion 21 and the lower portion of the inner wall portion 22A and separates the spring part arranged in the space surrounded by the inner wall portion 22A, the outer wall portion 22B, and the upper wall portion 22C from the mounting portion 21 of the pedestal 2 by a predetermined distance.

In this manner, in a case in which the paired hooks 22 are hooked over the spring parts of the two S springs 100 via the buffering members 3, the mounting surface 21S of the pedestal 2 is located further upward than the lowermost position P1 of the spring part. Also, in this case, the mounting surface 21S of the pedestal 2 is located further downward than an uppermost position P2 of the outer wall portion 22B of the hook 22 covering the upper portion of the spring part and is located further downward than an uppermost position P3 of the spring part.

The buffering member 3 is a member buffering the contact between the pedestal 2 and the S spring 100. The buffering member 3 is arranged between the inner wall portion 22A, the outer wall portion 22B, and the upper wall portion 22C of the hook 22 of the pedestal 2 and the spring part of the S spring 100 arranged in the space surrounded by the inner wall portion 22A, the outer wall portion 22B, and the upper wall portion 22C.

The buffering member 3 includes a buffering main body 31 and a locking nail 32 that can be hooked on the mounting portion 21 via the locking nail insertion opening 23 provided in the mounting portion 21 of the pedestal 2. The locking nail insertion opening 23 is an opening provided in the pedestal 2. In the case of the present embodiment, the buffering main body 31 and the locking nail 32 are integrated by means of resin forming.

On the lower side wall of the buffering main body 31 is provided a spring groove 31A that can cover, pinch, and fit to a part of the S spring 100 from the upper side of the S spring 100. The spring groove 31A is provided on the inner circumferential surface thereof with a pair of stopper pieces 31P (Fig. 2) holding the S spring 100 fitted in the spring groove 31A to keep the S spring 100 inside the groove.

Also, on the external sidewall of the buffering main body 31 is provided a hooking piece 31B inserted in an opening 220 provided in the outer wall portion 22B of the pedestal 2 to hold the pressing part 22PT. Further, on the internal sidewall of the buffering main body 31 is provided the locking nail 32 extending from the sidewall along the mounting surface 21S and then bending and extending toward the mounting surface 21S, and the locking nail 32 can be hooked on the mounting portion 21 via the locking nail insertion opening 23 from the reverse side of the mounting surface 21S.

In a state in which the spring part is fitted in the spring groove 31A of the buffering main body 31, and in which the locking nail 32 is hooked through the locking nail insertion opening 23 of the mounting portion 21, the pedestal 2 and the S spring 100 are secured by the buffering member 3 to have a certain positional relationship. In this state, in a case in which a part of the pressing member 22PT of the hook 22 is inserted into the hooking piece 31B of the buffering main body 31, the spring part and the buffering main body 31 fitted in the spring groove 31A of the buffering main body 31 are held to be wrapped by the hook 22 in the three directions. Hence, the pedestal 2 and the S spring 100 are secured further firmly.

Such a buffering member 3 has lower hardness than that of the pedestal 2. Examples of a material for the buffering member 3 are resins such as acrylonitrile, butadiene, and styrene copolymeric synthetic resin (ABS), polyamide (PA), polypropylene (PP), and polyacetal (POM). Also, examples of a material for the pedestal 2 are metals such as spring steel and a stainless steel material and resins such as polycarbonate (PC), polyimide (PI), polybutyleneterephthalate (PBT), a phenol resin, and an epoxy resin. The material for the pedestal 2 is preferably a metal to have high hardness.

The Rockwell hardness of the buffering member 3 is about HRR30 to HRR120, and the Rockwell hardness of the pedestal 2 is about HRB80 to HRC68. In a case in which the Rockwell hardness of the buffering member 3 is in the range from ERR30 to HRR120, an abnormal sound caused by the contact between the pedestal 2 and the S spring 100 can be restricted, and deformation of the buffering material caused by load can be restricted, which is favorable. Also, in a case in which the Rockwell hardness of the pedestal 2 is in a range from HRB80 to HRC68, the pedestal 2 is highly durable while the pedestal 2 is softer than the S spring 100, which is favorable.

The upper case 4 is a member covering the main block 50m mounted on the mounting surface 21S of the mounting portion 21 to protect the switch SW of the main block 50m and the like. The upper case 4 is also a pressing member pressing the switch SW of the load detection sensor 5 as the upper case 4 is pressed by the seat cushion SC as illustrated in Fig. 2.

The upper case 4 includes a top wall 45 and a frame wall 48. The top wall 45 is a plate-like member formed approximately in a circular shape. Also, the frame wall 48 of the upper case 4 is divided into a plurality of pieces and is connected to the outer circumference of the top wall 45. At each space between the plurality of divided pieces of the frame wall 48, a hook piece 47 is connected to the top wall 45. Each of the hook pieces 47 is adapted to be fitted into the case stop opening 24 in the mounting portion 21 of the pedestal 2. Each of the hook pieces 47 is fitted into the case stop opening 24 to cause relative movement between the pedestal 2 and the upper case 4 in a direction of the mounting surface 21S to be restricted.

The top wall 45 of the upper case 4 is provided with a pressing portion 46 projecting from the bottom surface thereof opposed to the mounting portion 21 of the pedestal 2. The tip end of the pressing portion 46 is formed in a planar shape. Meanwhile, the tip end of the pressing portion 46 may be formed in a protruded curved shape.

The top wall 45 of the upper case 4 is also provided with a plurality of ribs 49 projecting from the same bottom surface thereof as that provided with the pressing portion 46. The ribs 49 are formed at positions overlapping with the plurality of through holes 20H formed in the mounting portion 21 of the pedestal 2. In a state in which the upper case 4 covers the load detection sensor 5 mounted on the mounting portion 21 of the pedestal 2, and in which the respective hook pieces 47 are fitted in the respective case stop openings 24, the respective ribs 49 are inserted in the corresponding through holes 20H. Accordingly, even in a case in which the entire sheet surface of the load detection sensor 5 is not attached to the mounting portion 21, relative movement between the switch SW of the load detection sensor 5 and the pressing portion 46 of the upper case 4 in the direction of the mounting surface 21S is restricted. Meanwhile, in the case of the present embodiment, although the tip end of the pressing portion 46 contacts the load detection sensor 5 in a state in which the upper case 4 covers the load detection sensor 5 mounted on the mounting portion 21, and in which the hook pieces 47 are fitted in the corresponding case stop openings 24, the tip end of the pressing portion 46 may not contact the load detection sensor 5.

The upper case 4 is made of a harder material than the seat cushion SC. Hence, the pressing portion 46 serving as a part of the upper case 4 is also made of a harder material than the seat cushion SC. Since the seat cushion SC is generally made of a foamed urethane resin, examples of the material for the upper case 4 are resins such as polycarbonate (PC), polyimide (PI), polybutyleneterephthalate (PBT), a phenol resin, and an epoxy resin.

In a state in which such a load detection sensor unit 1 is attached to the pair of S springs 100, an upper surface 45S of the top wall 45 of the upper case 4 is opposed to the lower surface of the seat cushion SC to have a predetermined distance. The upper surface 45S is in a planar shape. The upper surface 45S is a pressure receiving surface receiving pressure from the seat cushion SC and has a larger area than the area in the pressing portion 46 contacting the switch SW of the load detection sensor 5.

The load detection sensor 5 includes the switch SW, a flexible switch sheet 50, a metal plate 60, and an adhesive layer 70 attaching the switch sheet 50 to the metal plate 60. The switch sheet 50 and the metal plate 60 are attached to each other by the adhesive layer 70.

The switch sheet 50 is a sheet-like membrane switch and includes an approximately rectangular main block 50m and a tail block 50t connected to the main block 50m and having a shorter width than that of the main block 50m. The main block 50m is provided with the switch SW. Also, the tail block 50t is provided with a wide blade portion 50f. Around the respective apexes of the main block 50m, through holes 50H are formed.

As illustrated in Fig. 2, the metal plate 60 is attached to one surface of the switch sheet 50 via the adhesive layer 70. In the present embodiment, the metal plate 60 is attached to a cushion-side surface 50mcs, in the main block 50m serving as a part of the switch sheet 50, which is a surface provided on the side of the seat cushion SC of the seat apparatus. The cushion-side surface 50mcs has a region overlapping with the switch SW of the switch sheet 50 in a direction perpendicular to the cushion-side surface 50mcs.

The adhesive layer 70 is a layer member attaching the switch sheet 50 to the metal plate 60. In the present embodiment, the adhesive layer 70 has an equal size to that of the metal plate 60. A material for the adhesive layer 70 may be any material as long as the adhesive layer 70 can attach the switch sheet 50 to the metal plate 60, and examples thereof are a thermoplastic resin, a thermosetting resin, and a light curing resin. Also, as the adhesive layer 70, one including a base material such as PET and a non-woven cloth and adhesive layers formed on both the surfaces of the base material may be used. A glass-transition point Tg of the adhesive layer 70 is preferably 85°C or higher. In a case in which the glass-transition point Tg is 85°C or higher, the adhesive layer 70 is difficult to flow even under a high-temperature environment such as an in-car environment in the hot sun, and false detection of seating due to the flow of the adhesive layer 70 can thus be restricted.

Next, the load detection sensor 5 will be described further in detail.

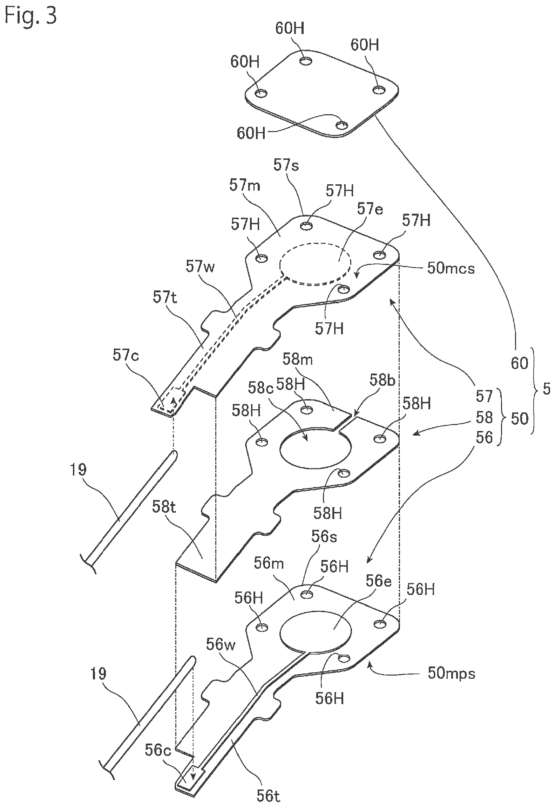

Fig. 3 is an exploded view of the load detection sensor 5. As illustrated in Fig. 3, the switch sheet 50 includes a first electrode sheet 56, a spacer 58, and a second electrode sheet 57. The first electrode sheet 56 mainly includes a first insulating sheet 56s, a first electrode 56e, and a first terminal 56c.

The first insulating sheet 56s is a flexible insulating sheet made of a resin. The first insulating sheet 56s includes a main block 56m having an equal shape to that of the main block 50m of the switch sheet 50 and a tail block 56t connected to the main block 56m and having an approximately equal shape to that of the tail block 50t of the switch sheet 50. The tail block 56t has a different shape from that of the tail block 50t of the switch sheet 50 in that a tip end part thereof on the opposite side of the main block 56m is narrower than the other parts of the tail block 56t. Also, the main block 56m is provided with through holes 56H at similar positions to those of the through holes 50H of the switch sheet 50. Examples of a material for the first insulating sheet 56s are resins such as polyethylene terephthalate (PET), polyimide (PI), and polyethylene naphthalate (PEN) . In the main block 56m of the first insulating sheet 56s, an opposite surface of a side opposed to the spacer 58 is a pedestal opposed surface 50mps of the main block 50m of the switch sheet 50 (Fig. 2).

The first electrode 56e is provided on one surface of the main block 56m approximately at the center. The first electrode 56e is a conductive layer such as an approximately circular metal printed layer. The first terminal 56c is a conductive layer such as an approximately rectangular metal layer. The first terminal 56c is provided at the tip end part on a surface of the tail block 56t provided with the first electrode 56e. Also, the first electrode 56e and the first terminal 56c are electrically connected to each other via a first wire 56w.

The second electrode sheet 57 mainly includes a second insulating sheet 57s, a second electrode 57e, and a second terminal 57c.

The second insulating sheet 57s is arranged further on the side of the seat cushion SC than the first electrode sheet 56 (Fig. 2) and is an insulating sheet made of a resin in a similar manner to the first insulating sheet 56s. In the case of the present embodiment, the second insulating sheet 57s includes a main block 57m having an equal shape to that of the main block 56m of the first insulating sheet 56s and a tail block 57t connected to the main block 57m and having an equal shape to that of the tail block 56t of the first insulating sheet 56s except a tip end part. The tip end part of the tail block 57t is narrower than the other parts of the tail block 57t. The tip end part of the tail block 56t of the first insulating sheet 56s and the tip end part of the tail block 57t of the second insulating sheet 57s do not overlap when the first insulating sheet 56s and the second insulating sheet 57s overlap with each other. In a similar manner to that in the first insulating sheet 56s, the main block 57m is provided with through holes 57H at similar positions to those of the through holes 50H of the switch sheet 50. Examples of a material for the second insulating sheet 57s are resins such as PET, PI, and PEN in a similar manner to that of the first insulating sheet 56s. The material for the second insulating sheet 57s may be equal to or different from the material for the first insulating sheet 56s.

The second electrode 57e has a similar configuration to that of the first electrode 56e and is provided on one surface of the main block 57m of the second insulating sheet 57s approximately at the center. The second electrode 57e is provided at a position at which the second electrode 57e overlaps with the first electrode 56e when the first electrode sheet 56 and the second electrode sheet 57 overlap with each other. The second terminal 57c has a similar configuration to that of the first terminal 56c and is provided at the tip end part on a surface of the tail block 57t provided with the second electrode 57e. Also, as described above, since the tip end parts of the respective insulating sheets do not overlap with each other when the first insulating sheet 56s and the second insulating sheet 57s overlap with each other, the first terminal 56c and the second terminal 57c are not located between the first insulating sheet 56s and the second insulating sheet 57s but are exposed. The second electrode 57e and the second terminal 57c are electrically connected to each other via a second wire 57w.

The spacer 58 is arranged between the first electrode sheet 56 and the second electrode sheet 57 and is a flexible insulating sheet made of a resin. The spacer 58 includes a main block 58m and a tail block 58t connected to the main block 58m. The main block 58m has a similar external shape to those of the main blocks 56m and 57m of the first insulating sheet 56s and the second insulating sheet 57s. The main block 58m is provided at the center with an opening 58c and is provided with through holes 58H at similar positions to those of the through holes 50H of the switch sheet 50 in a similar manner to those of the first insulating sheet 56s and the second insulating sheet 57s. The tail block 58t is formed in a shape of each of the tail blocks 56t and 57t of the first insulating sheet 56s and the second insulating sheet 57s excluding the narrow tip end parts.

The opening 58c is formed approximately in a circular shape and has a slightly shorter diameter than those of the first electrode 56e and the second electrode 57e. The opening 58c is formed to be located inside the circumferences of the first electrode 56e and the second electrode 57e in a case in which the spacer 58 overlaps with the first electrode sheet 56 and the second electrode sheet 57 and is in a planar view. The spacer 58 is also provided with a slit 58b connecting a space in the opening 58c to a space outside the switch sheet 50. The slit 58b serves as an air vent when the first electrode sheet 56, the spacer 58, and the second electrode sheet 57 overlap with each other. Meanwhile, the opening 58c may be formed to be located outside the circumferences of the first electrode 56e and the second electrode 57e in a case in which the spacer 58 overlaps with the first electrode sheet 56 and the second electrode sheet 57 and is in a planar view.

Examples of a material for the spacer 58 are resins such as PET, PI, and PEN in a similar manner to those of the first insulating sheet 56s and the second insulating sheet 57s. The material for the spacer 58 may be equal to or different from the material for the first insulating sheet 56s or the second insulating sheet 57s. Also, on both surfaces of the spacer 58 is applied not-illustrated adhesive causing the spacer 58 to be attached to the first electrode sheet 56 and the second electrode sheet 57.

In a state in which the first electrode sheet 56, the spacer 58, and the second electrode sheet 57 are attached in this order, the first electrode 56e and the first wire 56w of the first electrode sheet 56 and the second electrode 57e and the second wire 57w of the second electrode sheet 57 are located between the first insulating sheet 56s and the second insulating sheet 57s. The first electrode 56e and the second electrode 57e are opposed via the opening 58c to constitute the switch SW. Also, in a state in which the first electrode sheet 56, the spacer 58, and the second electrode sheet 57 overlap, the respective through holes 56H, 57H, and 58H overlap and serve as the through holes 50H of the switch sheet 50.

Also, to the first terminal 56c and the second terminal 57c of the switch sheet 50 are respectively connected signal cables 19 connected to a not-illustrated control device. The first terminal 56c and the second. terminal 57c, and the respective signal cables 19, are connected by means of conductive paste, soldering, or the like. The end portion of the tail block 50t of the switch sheet 50 including the first terminal 56c and the second terminal 57c connected to the signal cables 19 is covered with a terminal sealing resin 18 as illustrated in Fig. 1. The terminal sealing resin 18 is made of hot melt or a light curing resin, for example. In this manner, the respective signal cables 19 are restricted from being detached from the respective first and second terminals 56c and 57c, and the first terminal 56c and the second terminal 57c are restricted from shorting due to conductive dust or the like.

The metal plate 60 is made of a metal plate which is more difficult to flex than the switch sheet 50. A material for the metal plate 60 is not particularly limited as long as the material is a conductive metal, and examples thereof are copper and stainless steel. In the case of the present embodiment, the metal plate 60 has an approximately equal shape to that of the main block 50m of the switch sheet 50.

The metal plate 60 is provided with through holes 60H at similar positions to those of the through holes 50H of the switch sheet 50. When the switch sheet 50 and the metal plate 60 overlap, the through holes 50H of the switch sheet 50 and the through holes 60H of the metal plate 60 overlap with each other. Also, when the switch sheet 50 and the metal plate 60 overlap, the metal plate 60 is attached to the cushion-side surface 50mcs to cover the switch SW of the switch sheet 50 via the adhesive layer 70.

The load detection sensor 5 configured as above is arranged on the mounting portion 21 of the pedestal 2 as illustrated in Fig. 2. Specifically, the main block 50m of the switch sheet 50 including the switch SW is located on the mounting portion 21 of the pedestal 2. The tail block 50t of the switch sheet 50, the terminal sealing resin 18, and the pair of signal cables 19 are drawn from the pedestal 2.

Also, as described above, in a state in which the upper case 4 covers the load detection sensor 5 mounted on the pedestal 2, and in which the respective hook pieces 47 are fit into the respective case stop openings 24, the tip end of the pressing portion 46 contacts a position of the metal plate 60 of the load detection sensor 5 overlapping with the switch SW. Also, in this state, the respective ribs 49 pass through the corresponding through holes 60H of the metal plate 60, through holes 50H of the switch sheet 50, and through holes 20H of the pedestal 2. Thus, even in a state in which the pedestal 2 and the first insulating sheet 56s are not attached, relative movement between the switch SW of the load detection sensor 5 and the pressing portion 46 of the upper case 4 is restricted. That is, it can be understood that the ribs 49 are movement restricting members restricting relative movement between the switch sheet 50 and the pedestal 2 in the direction along the pedestal opposed surface 50mps.

Next, detection of seating by means of the load detection sensor unit 1 according to the present embodiment will be described.

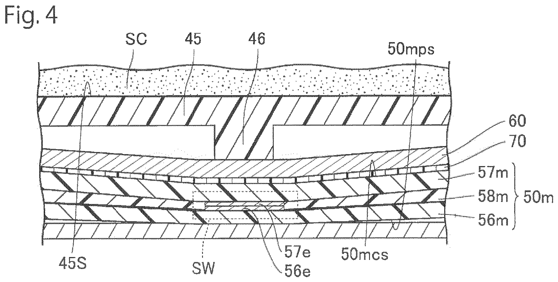

Fig. 4 illustrates an on state of the load detection sensor 5. When a person sits on the seating apparatus, the lower surface of the seat cushion SC moves downward, contacts the upper surface 45S of the upper case 4, and presses the upper surface 45S. When the lower surface of the seat cushion SC moves further downward, the tip end of the pressing portion 46 presses the metal plate 60, and due to flexure of the metal plate 60, the main block 57m of the second insulating sheet 57s also flexes as illustrated in Fig. 4. At this time, since the pedestal opposed surface 50mps of the main block 56m of the first insulating sheet 56s is not attached to the pedestal 2, at least the peripheral part of the switch SW is deformed to follow the flexure of the metal plate 60. As a result, the second electrode 57e contacts the first electrode 56e, and the switch SW of the load detection sensor 5 is turned on. Seating is then detected by the not-illustrated vehicle control unit connected to the signal cables 19.

As described above, in the load detection sensor unit 1 according to the present embodiment, the pedestal 2 of the load detection sensor 5 includes the pair of hooks 22 hooked respectively over the opposed spring parts. Each of the paired hooks 22 extends to cover the upper portion 100C in the spring part and the outer portion 100B located on the opposite side of the pedestal 2 in the spring part, and the buffering member 3 is arranged between the spring part and the hook 22. The buffering member 3 has lower hardness than that of the pedestal 2.

In the load detection sensor unit 1, since the buffering member 3 having lower hardness than that of the pedestal 2 is arranged between the hook 22 of the pedestal 2 and the spring part, a collision of the pedestal 2 with the spring is alleviated, and an abnormal sound caused by the contact between the pedestal 2 and the S spring 100 is difficult to occur.

Also, since the pedestal 2 has higher hardness than that of the buffering member 3, creep deformation is difficult to occur. Since the upper portion 100C and the outer portion 100B in the spring part are covered with the hook 22 of the pedestal 2, relative displacement between the spring part and the hook 22 caused by the creep deformation is difficult to occur. Accordingly, a change of the load weight causing the switch SW of the load detection sensor 5 to be turned on due to the relative displacement between the spring part and the hook 22 is restricted, and the load can be detected appropriately by the load detection sensor 5.

In this manner, the load detection sensor unit 1 according to the present embodiment can detect the load appropriately while restricting generation of the abnormal sound.

Also, in the case of the present embodiment, the hook 22 extends to cover the inner portion 100A located on the pedestal side in the spring part. Thus, since both the sides of the S spring 100 are covered with the hook 22, the relative displacement between the spring part and the hook 22 in a direction perpendicular to a direction in which the S spring 100 is stretched is restricted. Accordingly, the change of the load weight causing the switch SW of the load detection sensor 5 to be turned on can further be restricted.

Also, in the case of the present embodiment, the hook 22 presses the buffering member 3 from the outer portion 100B to the inner portion 100A of the spring part. Thus, due to pressing by means of the hook 22, the hook 22 settles on the spring part via the buffering member 3. Accordingly, the relative displacement between the spring part and the hook 22 in the direction in which the S spring 100 is stretched and in the perpendicular direction is restricted, and the change of the load weight causing the switch SW of the load detection sensor 5 to be turned on can further be restricted.

Also, in the case of the present embodiment, the pressing part 22PT, at which the hook 22 presses the buffering member 3, is located further downward than the lowermost position P1 of the spring part. Accordingly, since the hook 22 settles to wrap the spring part via the buffering member 3, the relative displacement between the spring part and the hook 22 can further be restricted.

Also, in the case of the present embodiment, the buffering member 3 is fitted to the spring part. Thus, the buffering member 3 itself arranged between the spring part and the hook 22 can restrict the relative displacement between the spring part and the hook 22, and the pedestal 2 can be settled over the S spring 100 more firmly by both the buffering member 3 and the hook 22.

Also, in the case of the present embodiment, the mounting surface 21S of the mounting portion 21 of the pedestal 2 is located further upward than the lowermost position P1 of the spring part. Accordingly, since the mounting surface 21S of the mounting portion 21 does not project further downward than the S spring 100, the pedestal 2 is not interfered with by anything provided below the S spring 100. Also, since the mounting surface 21S of the pedestal 2 is close to the seat cushion SC mounted on the S spring 100, load can be detected appropriately.

### (2) Second Embodiment

Next, a second embodiment of the present invention will be described. It is to be noted that, in the description of the present embodiment, similar or identical components to those in the first embodiment are shown with the same reference numerals, and description of the duplicate components is omitted except that the duplicate components are to be described in particular.

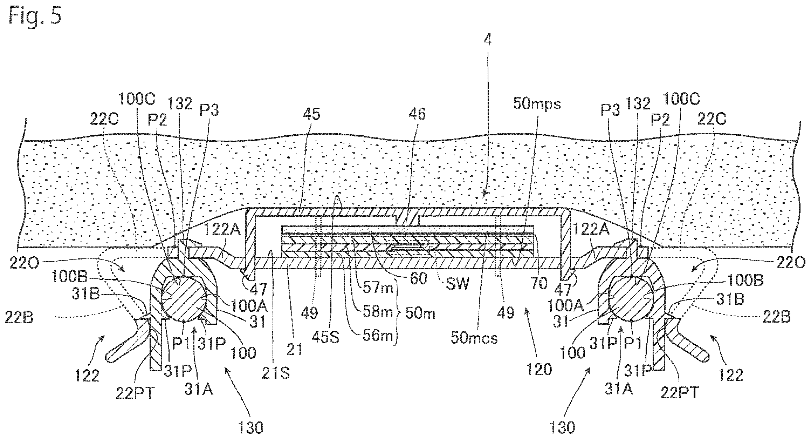

Fig. 5 illustrates the load detection sensor unit according to the second embodiment viewed in the same direction as that in Fig. 2. As illustrated in Fig. 5, the load detection sensor unit according to the present embodiment differs from that according to the first embodiment in that, instead of the locking nail 32 of the buffering member 3 in the first embodiment, a locking nail 132 having a different structure from that of the locking nail 32 is employed.

The locking nail 32 according to the first embodiment extends approximately in parallel with the mounting surface 21S inward from the inner sidewall of the buffering main body 31 and then bends toward the mounting surface 21S and extends. The locking nail 32 is arranged further inward than the inner portions 100A of the opposed S springs 100. Conversely, the locking nail 132 according to the present embodiment extends upward from the upper wall of the buffering main body 31 and is arranged further outward than the inner portions 100A of the opposed S springs 100. The buffering main body 31 is hooked on the mounting portion 21 via the locking nail insertion opening 23 from the opposite surface of the mounting surface 21S by such a locking nail 132.

Thus, in the load detection sensor unit according to the present embodiment, since the locking nail 32 does not exist further inward than the inner portions 100A of the S springs 100 as in the first embodiment, restriction on arrangement of the load detection sensor 5 due to the locking nail 132 is alleviated. Accordingly, even in a case in which the distance between the opposed spring parts is short, or in which the load detection sensor 5 is relatively large, the load detection sensor 5 can be arranged in a stable manner.

The load detection sensor unit according to the present embodiment also differs from that according to the first embodiment in that, instead of the pedestal 2 including the pair of hooks 22 according to the first embodiment, a pedestal 120 including a pair of hooks 122 having a different structure from that of the pair of hooks 22 is employed.

The paired hooks 122 have the same configurations with each other. Each of the hooks 122 includes an inner wall portion 122A different from that in the first embodiment, and the outer wall portion 22B and the upper wall portion 22C equal to those in the first embodiment, and omits the arm portion 22D according to the first embodiment.

While the inner wall portion 22A according to the first embodiment extends along the direction perpendicular to the mounting surface 21S of the mounting portion 21, the inner wall portion 122A according to the present embodiment extends obliquely with respect to the mounting surface 21S. Due to the inner wall portion 122A, the mounting surface 21S is located further downward than the uppermost position P2 of the outer wall portion 22B of the hook 122.

In a similar manner to the first embodiment, the mounting surface 21S is located further upward than the lowermost position P1 of the spring part surrounded by the hook 122. Also, the mounting surface 21S according to the present embodiment is located further upward than the uppermost position P3 of the spring part and is connected to the hook 122 not covering the inner portion 100A of the spring part at a further upward position than the uppermost position P3 of the spring part.

Thus, a level difference SP (Fig. 2) between the region over the spring part and the region provided with the load detection sensor 5 in the pedestal 2 can be reduced. Accordingly, restriction on arrangement of the load detection sensor 5 due to the level difference SP of the pedestal 2 is alleviated, and even in a case in which the distance between the opposed spring parts is short, or in which the load detection sensor 5 is relatively large, the load detection sensor 5 can be arranged in a stable manner.

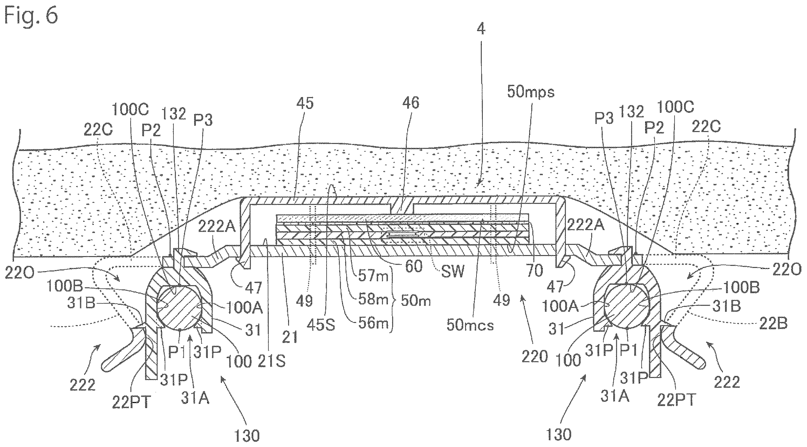

Meanwhile, instead of the pedestal 120 including the hook 122 according to the present embodiment, a pedestal 220 including a hook 222 illustrated in Fig. 6 may be employed. The hook 222 does not cover the inner portion 100A of the spring part but covers the outer portion 100B and the upper portion 100C. Also, an inner wall portion 222A of the hook 222 extends obliquely so that the mounting surface 21S may be located further upward than the uppermost position P2 of the outer wall portion 22B covering the upper portion 100C of the spring part. By doing so, it is possible to restrict the region provided with the load detection sensor 5 from being interfered with by the region over the spring part, and restriction on arrangement of the load detection sensor 5 can further be alleviated.

### (3) Third Embodiment

Next, a third embodiment of the present invention will be described. It is to be noted that, in the description of the present embodiment, similar or identical components to those in the first embodiment are shown with the same reference numerals, and description of the duplicate components is omitted except that the duplicate components are to be described in particular.

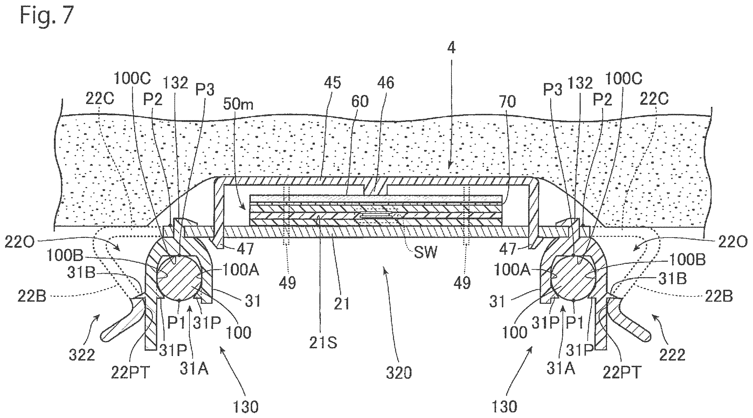

Fig. 7 illustrates the load detection sensor unit according to the third embodiment viewed in the same direction as that in Fig. 2. As illustrated in Fig. 7, the load detection sensor unit according to the present embodiment differs from that according to the second embodiment in that, instead of the pedestal 120 including the hook 122 in the second embodiment, a pedestal 320 including a hook 322 having a different structure from that of the hook 122 is employed.

The hook 322 does not cover the inner portion 100A of the spring part but covers the outer portion 100B and the upper portion 100C. Also, in the hook 322, the inner wall portion 122A according to the second embodiment extending obliquely with respect to the mounting surface 21S is omitted, and the mounting surface 21S is at an equal height to the uppermost position P2 of the part of the hook 322 covering the upper portion 100C of the spring part.

In this manner, in the load detection sensor unit according to the present embodiment, the inner wall portion 122A according to the second embodiment extending obliquely with respect to the mounting surface 21S is omitted, and the load detection sensor 5 and the hook 322 can get closer to each other as much as the length of the inner wall portion 122A. Accordingly, even in a case in which the distance between the opposed spring parts is short, the load detection sensor 5 can be arranged in a stable manner.

### (3) Modifications

Although the load detection sensor unit according to the present invention has been described above, taking the above embodiments as examples, the present invention is not limited to the above embodiments.

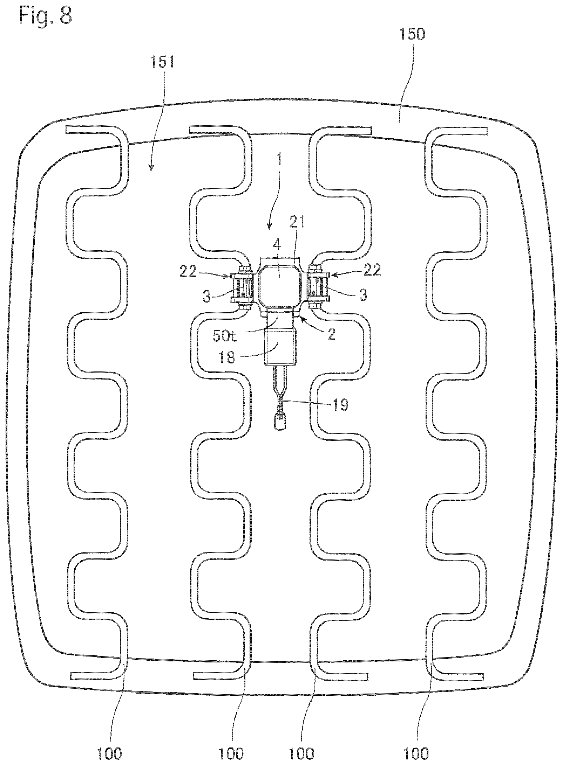

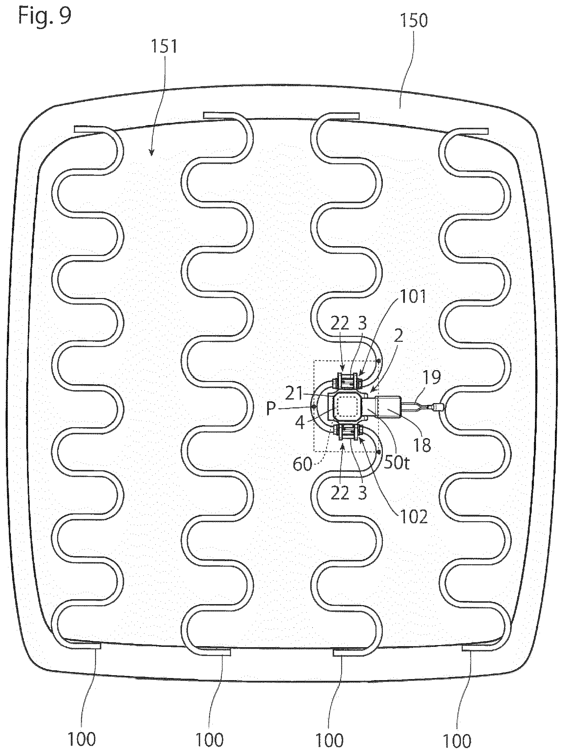

For example, in the first embodiment, as illustrated in Fig. 8, the pedestal 2 is arranged between the spring parts in the two opposed S springs 100 out of the plurality of S springs 100 stretched to be arrayed over an opening 151 of a frame 150. However, as illustrated in Fig. 9, the pedestal 2 may be arranged between opposed spring parts in one S spring 100 out of the plurality of S springs 100 stretched to be arrayed over the opening 151 of the frame 150. Meanwhile, the opposed spring parts in the S spring 100 are a spring part 101 extending on one side and a spring part 102 extending on the other side from a bent position P having the highest curvature in the bent part of the S spring 100.

Also, although each of the pedestal 120 according to the second embodiment and the pedestal 320 according to the third embodiment is arranged between the spring parts in the two opposed S springs 100, each of the pedestals may be arranged between opposed spring parts in one S spring 100. Meanwhile, as described above, in terms of arranging the load detection sensor 5 in a stable manner even in a case in which the distance between the opposed spring parts is short, the pedestal 120 according to the second embodiment or the pedestal 320 according to the third embodiment is more useful than the pedestal 2 according to the first embodiment.

Also, in the above embodiments, the S spring 100 meandering in an S shape is employed as the spring stretched to be arrayed over the opening of the seat frame. However, instead of the S spring 100, a spring meandering in a rectangular wave shape may be employed, for example. Meanwhile, the springs formed in various shapes are applicable as long as the springs are the plurality of springs stretched to be arrayed over the opening of the seat frame, and the spring preferably has a bent part by meandering or the like.

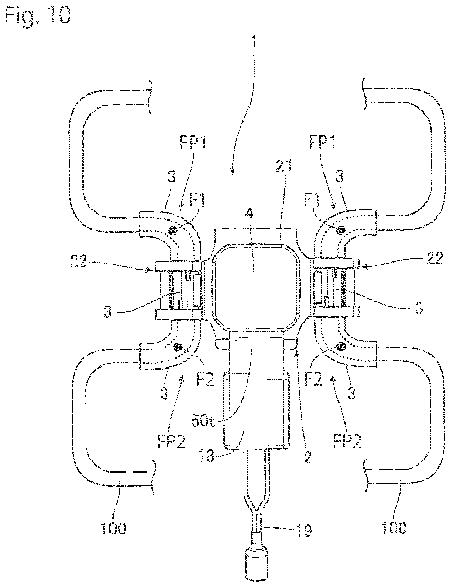

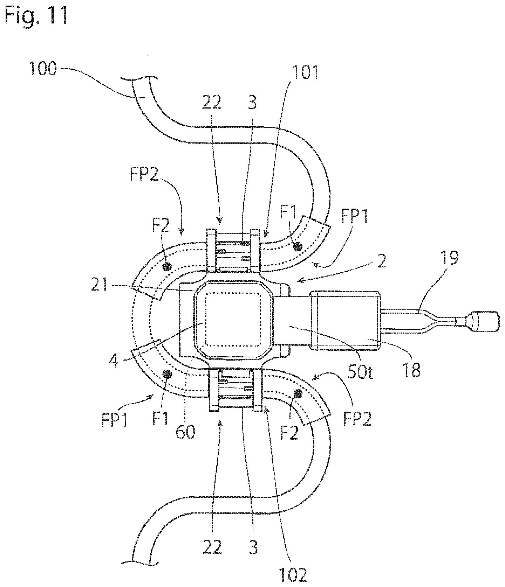

Also, in the above embodiments, the hook 22 is hooked on a linear part of the S spring 100, and the buffering member 3 is fitted only to the linear part. However, a part on which the hook 22 is hooked may not be the linear part of the S spring 100. Nevertheless, the part on which the hook 22 is hooked is preferably the linear part of the S spring 100. Also, the buffering member 3 may extend to a part except the spring part on which the hook 22 is hooked. The buffering members 3 each extending to the part except the spring part on which the hook is hooked are illustrated in Figs. 10 and 11. The buffering member 3 illustrated in Fig. 10 extends from a spring part on which the hook 22 is hooked toward one end side of the spring 100 to a closest first bent portion FP1 and from the spring part toward the other end side of the spring 100 to a closest second bent portion FP2. In a similar manner to the buffering member 3 illustrated in Fig. 10, the buffering member 3 illustrated in Fig. 11 extends from a spring part on which the hook 22 is hooked to the first bent portion FP1 and from the spring part to the second bent portion FP2. In the spring groove 31A of each of the buffering members 3, the spring 100 is fitted from the spring part on which the hook 22 is hooked to the first bent portion FP1 and the second bent portion FP2. In a case in which the buffering member 3 extends in this manner, the spring is covered with the buffering member 3 from the spring part on which the hook 22 is hooked to the first bent portion FP1 and the second bent portion FP2. Accordingly, relative displacement between the spring 100 and the buffering member 3 can further be restricted, and the pedestal 2 can be settled over the spring more firmly by both the buffering member 3 and the hook 22.

Meanwhile, each of the buffering members 3 illustrated in Figs. 10 and 11 extends from the spring part on which the hook 22 is hooked to the first bent portion FP1 and from the spring part to the second bent portion FP2. However, the buffering member 3 may extend from the spring part on which the hook 22 is hooked to the first bent portion FP1 and, on the side of the second bent portion FP2, extend from the spring part to the hooking part of the hook 22 in the S spring 100 in a similar manner to the above embodiments. Also, the buffering member 3 may extend from the spring part on which the hook 22 is hooked to the second bent portion FP2 and, on the side of the first bent portion FP1, extend from the spring part to the hooking part of the hook 22 in the S spring 100 in a similar manner to the above embodiments.

Also, each of the buffering members 3 illustrated in Figs. 10 and 11 may extend from the spring part on which the hook 22 is hooked to pass the first bent portion FP1 to one side of the spring 100. In terms of restricting the relative displacement between the spring 100 and the buffering member 3, the buffering member 3 preferably extends to a bent position F1 having the highest curvature in the first bent portion FP1 or goes over the bent position F1. However, the buffering member 3 has only to extend to the first bent portion FP1 and may not reach the bent position F1 of the first bent portion FP1.

Similarly, each of the buffering members 3 illustrated in Figs. 10 and 11 may extend from the spring part on which the hook 22 is hooked to pass the second bent portion FP2 to the other side of the spring 100. In terms of restricting the relative displacement between the spring 100 and the buffering member 3, the buffering member 3 preferably extends to a bent position F2 having the highest curvature in the second bent portion FP2 or goes over the bent position F2. However, the buffering member 3 has only to extend to the second bent portion FP2 and may not reach the bent position F2 of the second bent portion FP2.

Also, in the above embodiments, the main block 50m including the switch SW and being larger than the switch SW is arranged on the mounting surface 21S of the pedestal 2 or 120. However, a part of the main block 50m and the tail block 50t may be arranged on the mounting surface 21S, or the entire switch sheet 50 may be arranged on the mounting surface 21S. In other words, at least a part of the load detection sensor 5 including the switch SW has only to be arranged on the mounting surface 21S.

Also, in the above embodiments, the so-called membrane switch load detection sensor 5 has been applied. That is, the load detection sensor 5 includes the pair of opposed insulating sheets 56s and 57s and the spacer 58 arranged between the insulating sheets 56s and 57s. The load detection sensor 5 also includes the pair of electrodes 56e and 57e opposed to be spaced from each other via the opening 58c of the spacer 58 and provided respectively on the opposed surfaces of the paired insulating sheets 56s and 57s and the metal plate 60 provided on the surface of the insulating sheet 57s which is an opposite side of a side on which the electrode 57e is provided.

However, a load detection sensor having a different configuration from that of the load detection sensor 5 according to the above embodiments can be applied as long as the load detection sensor is one detecting load. For example, instead of the insulating sheet 56s, a substrate having no flexibility may be employed. Also, the insulating sheet 57s may be omitted, and the metal plate 60 may function as the insulating sheet 57s and the electrode 57e. Further, an electrostatic-capacitance-type load detection sensor may be applied in which, instead of the spacer 58, a flexible sheet-like spacer omitting the opening 58c is employed, in which the spacer flexes in response to a pressing force, and in which load is detected based on electrostatic capacitance which changes as the distance between the electrodes 56e and 57e opposed with the spacer interposed therebetween is reduced.

Also, in the above embodiments, although the upper case 4 is provided, the upper case 4 may be omitted.

The respective components of the above load detection sensor unit can not only be used as described in the above embodiments and modifications but can also be combined, omitted, changed, or mixed with known techniques as needed as long as they remain within the scope of the appended claims.

The present invention is applicable as long as the present invention is arranged under a seat cushion, is attached to a plurality of springs stretched to be arrayed over an opening of a frame, and detects load applied from a detected target. That is, although, in the above embodiments, the load detection sensor unit is attached to the plurality of springs stretched to be arrayed over the opening of the vehicle frame and detects pressure resulting from seating of a person, other embodiments can be employed instead of the above embodiments. For example, an embodiment is raised as an example in which the load detection sensor unit is attached to a plurality of springs stretched to be arrayed over an opening of a frame under a seat cushion of a care bed. In such an embodiment, whether a person exists in the care bed can be detected with use of the load detection sensor unit. Meanwhile, an elastic member may be used as the seat cushion. As the elastic member, any material may be used as long as the material has an elastic force and enables load from a detected target to be transmitted to the load detection sensor unit, and examples of the material for the elastic member are urethane, silicon, and ethylene propylene.

### Reference Signs List

- 1: load detection sensor unit
- 2, 120, 220, 320: pedestal
- 3, 130: buffering member
- 4: upper case
- 5: load detection sensor
- 21: mounting portion
- 21S: mounting surface
- 22, 122, 222, 322: hook
- 31: buffering main body
- 32, 132: locking nail
- SC: seat cushion
- SW: switch

## Claims

1. A load detection sensor unit (1) which can be arranged under a seat cushion (SC), comprising:
a load detection sensor (5) detecting load; and
a pedestal (2) including a mounting portion (21) on which the load detection sensor (5) is mounted and which can be attached to at least opposed spring parts out of a plurality of springs (100) stretched to be arrayed over an opening of a frame(150),
wherein the pedestal (2) includes a pair of hooks (22) which can be hooked respectively over the opposed spring parts,
wherein each of the hooks (22) extends to cover at least an upper portion (100C) of the spring part and an outer portion (100B) of the spring part located on an opposite side of the opposed side, the load detection sensor unit (1) further comprising a buffering member (3) arranged at least at a part between the spring part and each hook (22),
wherein the buffering member (3) has lower hardness than that of the pedestal (2) and is arranged between the hook (22) and the spring part, and
wherein the hook (22) presses the buffering member (3) from the outer portion (100B) to an inner portion (100A) of the spring part,
**characterized in that**
wherein a part of the buffering member (3) that the hook (22) presses is located further downward than a lowermost position of the spring part.

2. The load detection sensor unit (1) according to claim 1, wherein each of the hooks extends to cover the inner portion (100A) of the spring part located on the opposed side.

3. The load detection sensor unit (1) according to claim 1 or 2, wherein the buffering member (3) includes a locking nail (132) that can be hooked on the pedestal (2) via an opening (23) provided in the pedestal (2), and wherein the locking nail (132) is arranged further outward than the inner portion (100A) of each of the opposed spring parts.

4. A combination of the load detection sensor unit (1) according to claims 1 to 3 and the spring part, wherein the buffering member (3) is fitted to the spring part.

5. The combination according to claim 4, wherein the buffering member (3) extends either/both to a closest first bent portion (FP1) toward a first end side of the spring (100) from the spring part on which the hook (22) is hooked or/and to a closest second bent portion (FP2) toward a second end side of the spring (100) from the spring part.

6. The combination according to claim 4 or 5, wherein a mounting surface (21S) of the mounting portion (21) is located further upward than the lowermost position (P1) of the spring part.

7. The combination according to claim 4 or 5, wherein the mounting surface (21S) of the mounting portion (21) is located further upward than an uppermost position (P3) of the spring part and is connected to the hook (22) at a further upward position than the uppermost position (P3) of the spring part.

8. The combination according to claim 7, wherein the mounting surface (21S) is located at an equal height to or further upward than an uppermost position (P2) of a part of the hook (22) covering an upper portion (100C) of the spring part.

## Patentansprüche

1. Eine Ladungserfassungssensoreinheit (1) die unter einem Sitzkissen (SC) angeordnet werden kann, umfassend:
einen Lasterfassungssensor (5), der eine Last erfasst; und
einen Sockel (2) mit einem Montageabschnitt (21), auf dem der Lasterfassungssensor (5) montiert ist und der an mindestens gegenüberliegenden Federteilen aus einer Vielzahl von Federn (100) befestigt werden kann, die so gespannt sind, dass sie über einer Öffnung eines Rahmens (150) angeordnet sind,
wobei der Sockel (2) ein Paar von Haken (22) aufweist, die jeweils über die gegenüberliegenden Federteile gehakt werden können,
wobei sich jeder der Haken (22) so erstreckt, um zumindest einen oberen Abschnitt (100C) des Federteils und einen äußeren Abschnitt (100B) des Federteils, der sich auf einer gegenüberliegenden Seite der gegenüberliegenden Seite befindet, abzudecken, wobei die Lasterfassungssensoreinheit (1) ferner ein Pufferelement (3) umfasst, das zumindest an einem Teil zwischen dem Federteil und jedem Haken (22) angeordnet ist,
wobei das Pufferelement (3) eine geringere Härte als die des Sockels (2) aufweist und zwischen dem Haken (22) und dem Federteil angeordnet ist, und
wobei der Haken (22) das Pufferelement (3) von dem äußeren Abschnitt (100B) zu einem inneren Abschnitt (100A) des Federteils drückt,
**gekennzeichnet dadurch dass**
ein Teil des Pufferelements (3), auf den der Haken (22) drückt, weiter unten angeordnet ist als eine unterste Position des Federteils.

2. Die Ladungserfassungssensoreinheit (1) gemäß Anspruch 1, wobei
jeder der Haken sich so erstreckt, dass er den inneren Abschnitt (100A) des auf der gegenüberliegenden Seite befindlichen Federteils abdeckt.

3. Die Ladungserfassungssensoreinheit (1) gemäß Anspruch 1 oder 2, wobei
das Pufferelement (3) einen Verriegelungsnagel (132) aufweist, der über eine in dem Sockel (2) vorgesehene Öffnung (23) in den Sockel (2) eingehängt werden kann, und
wobei der Verriegelungsnagel (132) weiter außen angeordnet ist als der innere Abschnitt (100A) eines jeden der gegenüberliegenden Federteile.

4. Eine Kombination aus der Lasterfassungssensoreinheit (1) gemäß einem der Ansprüche 1 bis 3 und dem Federteil, wobei
das Pufferelement (3) an dem Federteil eingehängt ist.

5. Die Kombination gemäß Anspruch 4, wobei
das Pufferelement (3) sich entweder/sowohl zu einem nächstgelegenen ersten gebogenen Abschnitt (FP1) in Richtung einer ersten Endseite der Feder (100) von dem Federteil, an dem der Haken (22) eingehakt ist, oder/als auch zu einem nächstgelegenen zweiten gebogenen Abschnitt (FP2) in Richtung einer zweiten Endseite der Feder (100) von dem Federteil erstreckt.

6. Die Kombination gemäß Anspruch 4 oder 5, wobei
eine Montagefläche (21S) des Montageabschnitts (21) weiter oben angeordnet ist als die unterste Position (P1) des Federteils.

7. Die Kombination gemäß Anspruch 4 oder 5, wobei
die Montagefläche (21S) des Montageabschnitts (21) sich weiter oben befindet als eine oberste Position (P3) des Federteils und mit dem Haken (22) an einer weiter oben liegenden Position als die oberste Position (P3) des Federteils verbunden ist.

8. Die Kombination gemäß Anspruch 7, wobei
die Montagefläche (21S) sich auf gleicher Höhe oder weiter oben befindet als eine oberste Position (P2) eines Teils des Hakens (22), der einen oberen Abschnitt (100C) des Federteils abdeckt.

## Revendications

1. Unité de capteur de détection de charge (1) qui peut être disposée sous un coussin de siège (SC), comprenant :
un capteur de détection de charge (5) détectant une charge, et
une base (2) incluant un organe de montage (21) sur lequel est monté le capteur de détection de charge (5) et qui peut être fixé au moins sur des éléments ressorts opposés d'une pluralité de ressorts (100) étirés pour être disposés en matrice par-dessus une ouverture de châssis (150),
dans laquelle la base (2) inclut une paire de crochets (22) qui peuvent être respectivement accrochés sur les éléments ressorts opposés,
dans laquelle chacun des crochets (22) s'étend pour recouvrir au moins une partie supérieure (100C) de l'élément ressort et une partie externe (100B) de l'élément ressort située sur un côté opposé du côté opposé, l'unité de capteur de détection de charge (1) comprenant en outre un élément d'amortissement (3) disposé sur au moins une partie située entre l'élément ressort et chaque crochet (22),
dans laquelle l'élément d'amortissement (3) présente une dureté inférieure à celle de la base (2) et il est disposé entre le crochet (22) et l'élément ressort, et
dans laquelle le crochet (22) comprime l'élément d'amortissement (3) depuis la partie externe (100B) jusqu'à une partie interne (100A) de l'élément ressort,
**caractérisé en ce que :**
une partie de l'élément d'amortissement (3) que comprime le crochet (22) est située encore plus bas que la partie la plus basse de l'élément ressort.

2. Unité de capteur de détection de charge (1) selon la revendication 1, dans laquelle chacun des crochets s'étend pour recouvrir la partie interne (100A) de l'élément ressort située sur le côté opposé.

3. Unité de capteur de détection de charge (1) selon la revendication 1 ou la revendication 2, dans laquelle l'élément d'amortissement (3) inclut un clou de blocage (132) qui peut être accroché sur la base (2) par l'intermédiaire d'une ouverture (23) ménagée dans la base (2), et dans laquelle le clou de blocage (132) est disposé plus vers l'extérieur que la partie interne (100A) de chacun des éléments ressorts opposés.

4. Combinaison de l'unité de capteur de détection de charge (1) selon les revendications 1 à 3 et l'élément ressort, dans laquelle l'élément d'amortissement (3) est ajusté à l'élément ressort.

5. Combinaison selon la revendication 4, dans laquelle l'élément d'amortissement (3) s'étend soit jusqu'à une première partie repliée (FP1) plus proche vers une première extrémité du ressort (100) depuis l'élément ressort sur lequel est accroché le crochet (22) et/ou jusqu'à une seconde partie repliée (FP2) vers une seconde extrémité du ressort (100) depuis l'élément ressort, ou bien jusqu'aux deux.

6. Combinaison selon la revendication 4 ou la revendication 5, dans laquelle la surface de montage (21S) de l'organe de montage (21) est située encore plus haut que la position la plus basse (P1) de l'élément ressort.

7. Combinaison selon la revendication 4 ou la revendication 5, dans laquelle la surface de montage (21S) de l'organe de montage (21) est située encore plus haut que la position la plus haute (P3) de l'élément ressort, et elle est reliée au crochet (22) sur une position encore plus haute que la position la plus haute (P3) de l'élément ressort.

8. Combinaison selon la revendication 7, dans lequel la surface de montage (21S) est située à une hauteur égale à la position la plus haute (P2) d'une partie du crochet (22) recouvrant la partie supérieure (100C) de l'élément ressort ou bien plus vers le haut.
